(19) Europäisches Patentamt
European Patent Office
Office européen des brevets

(11) **EP 2 536 019 B1**

(12) **EUROPÄISCHE PATENTSCHRIFT**

(45) Veröffentlichungstag und Bekanntmachung des Hinweises auf die Patenterteilung:
**03.01.2018 Patentblatt 2018/01**

(21) Anmeldenummer: **12004260.1**

(22) Anmeldetag: **05.06.2012**

(51) Int Cl.:
*H02P 27/08* (2006.01)    *H02M 7/5387* (2007.01)
*H02M 7/5395* (2006.01)

(54) **Verfahren zur Steuerung eines Umrichters**

Method for controlling an inverter

Procédé destiné à la commande d'un convertisseur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2011 DE 102011104742**
**20.10.2011 DE 102011116615**
**06.12.2011 DE 102011120333**

(43) Veröffentlichungstag der Anmeldung:
**19.12.2012 Patentblatt 2012/51**

(73) Patentinhaber: **Diehl AKO Stiftung & Co. KG**
**88239 Wangen im Allgäu (DE)**

(72) Erfinder:
• **Weinmann, Martin**
**88339 Bad Waldsee (DE)**
• **Zeh, Stefan**
**88239 Wangen (DE)**
• **Olarescu, Nicola-Valeriu**
**88239 Wangen (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
**EP-A1- 2 148 418        JP-A- 2004 048 885**
**JP-A- 2005 318 702     JP-A- 2008 141 856**
**US-A1- 2004 207 360    US-A1- 2008 079 377**
**US-A1- 2008 224 649    US-A1- 2009 179 608**

• **HARAS A ET AL: "VECTOR PWM MODULATOR WITH CONTINUOUS TRANSITION TO THE SIX-STEP MODE", EPE '95: 6TH. EUROPEAN CONFERENCE ON POWER ELECTRONICS AND APPLICATIONS. SEVILLA, SEPT. 19 - 21, 1995; [EUROPEAN CONFERENCE ON POWER ELECTRONICS AND APPLICATIONS], BRUSSELS, EPE ASSOCIATION, B, vol. 1, 19 September 1995 (1995-09-19), pages 1.729-1.734, XP000537611,**
• **HARAS A ED - EPE ASSOCIATION: "SPACE VECTOR MODULATION IN ORTHOGONAL AND NATURAL FRAMES INCLUDING THE OVERMODULATION RANGE", EPE '97. 7TH. EUROPEAN CONFERENCE ON POWER ELECTRONICS AND APPLICATIONS. TRONDHEIM, SEPT. 8 - 10, 1997; [EPE . EUROPEAN CONFERENCE ON POWER ELECTRONICS AND APPLICATIONS], BRUSSELS, EPE ASSOCIATION, B, vol. CONF. 7, 8 September 1997 (1997-09-08), pages 2.237-2.342, XP000792303, ISBN: 978-90-75815-02-3**

**Beschreibung**

Die Erfindung betrifft ein Verfahren zur Steuerung eines dreiphasigen Umrichters mit Spannungszwischenkreis mittels Pulsweitenmodulation zur Versorgung eines Drehstromsystems, insbesondere eines dreiphasigen Wechselstromsystems. Das Drehstromsystem kann dabei eine motorisch oder generatorisch betriebene Maschine (Drehfeldmaschine) ebenso darstellen wie ein Drehstromnetz. Insbesondere bezieht sich die Erfindung auch auf einen dreiphasigen Drehstrommotor einer Haushaltswaschmaschine oder eines Antriebs für ein Automobil. Der Drehstrommotor kann im Feldschwäch- oder Konstantleistungsbetrieb bei voller oder nahezu voller Motorspannung betrieben werden. Insbesondere kann der zur Versorgung eines Drehstromnetzes vorgesehene Umrichter von einem Solargenerator gespeist sein. Die Erfindung eignet sich insofern auch zum Betrieb einer Photovoltaikanlage, bzw. zum Betrieb einer Anlage mit einer anderen Gleichstromquelle.

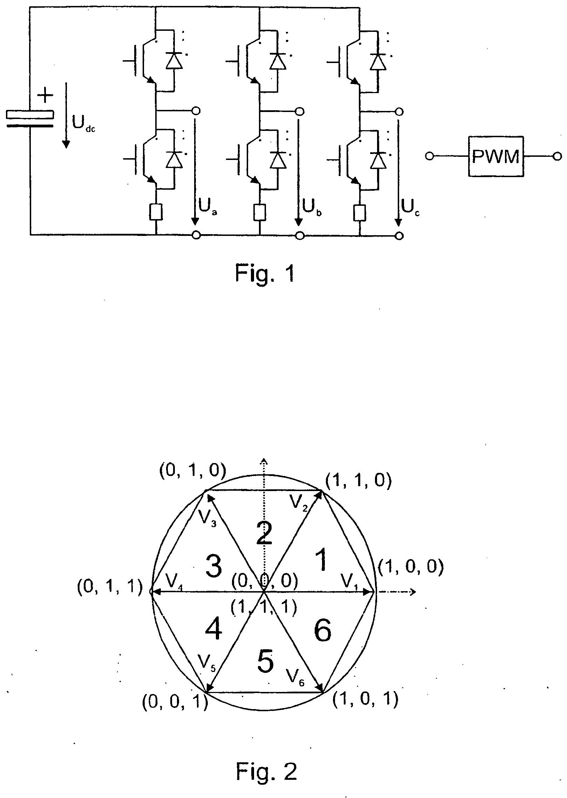

Ein dreiphasiger Umrichter zur Erzeugung der Ausgangsspannungen für ein Drehfeldsystem aus einem Spannungszwischenkreis entsprechend Figur 1 ist aus dem Stand der Technik hinlänglich bekannt. Ein solcher Umrichter umfasst drei Halbbrücken mit jeweils zwei Paaren aus je einem Schaltelement und einer parallel geschalteten Diode. Jeweils zwischen den Paaren einer Halbbrücke sind die einzelnen Phasen für das Drehstromsystem kontaktiert. Die für das Drehstromsystem benötigten Spannungen sind durch die Potentialdifferenzen der einzelnen Phasen zueinander gegeben. Durch wechselweises Schalten der beiden Schaltelemente einer Halbbrücke wird die jeweilige Phase abwechselnd auf das obere oder das untere Zwischenkreispotential geklemmt.

Auch die Ansteuerung der insgesamt sechs Schaltelemente, von denen jeweils zwei auf eine der drei Halbbrücken des Umrichters verteilt sind, mittels Pulsweitenmodulation ist bekannt, wozu beispielhaft auf Handley, P.G.; Boys, J.T; "Practical real-time PWM modulators: an assessment", IEE Proceedings B, Electric Power Applications, Volume 139, pp. 96 ff., Issue 2, March 1992 hingewiesen wird. Als Schaltelemente weisen moderne Umrichter fast ausschließlich schaltbare Leistungshalbleiter auf. Als derartige Leistungshalbleiter werden neben Feldeffekttranstoren, MOS-FET ("Metal Oxide Semiconductor" - FeldeffektTransistoren) und Bipolar-Transistoren, insbesondere sogenannte IGBT's (Insulated Gate Bipolar Transistors) eingesetzt. Letztere vereinbaren dabei die Vorzüge von Feldeffekt- und Bipolartransistoren.

Bei der Pulsweitenmodulation wird für die Phase einer Halbbrücke das Potential oder die Spannung gegenüber einem Bezugspotential, z. B. $U_a$ entsprechend Figur 1, durch Wechsel der Schaltzustände der entsprechenden Schaltelemente innerhalb einer vorgegebenen Periodendauer eingestellt. Mit anderen Worten wird bei der Pulsweitenmodulation bei konstanter Frequenz der Tastgrad moduliert. Der Wert der Ausgangsspannung einer Periodendauer resultiert hierbei durch ein "Aufsummieren" der jeweils eingestellten Schaltzustände bzw. aus dem Verhältnis der Schaltzeiten der Klemmung an das obere und der Klemmung an das untere Zwischenkreispotential.

Zulässige Schaltzustände des Umrichters sind für jeweils eine Halbbrücke "TopOn", d. h. oberes Schaltelement an und unteres Schaltelement aus, "Bot (-tom) on", d.h. unteres Schaltelement an und oberes Schaltelement aus sowie "Totzeit", falls beide der Schaltelemente ausgeschaltet sind. Der letzte Schaltzustand einer "Totzeit" wird gewöhnlich nur für vernachlässigbare kleine Zeitdauern (ca. 1% Dauer) zwischen den Zuständen "TopOn" oder "BotOn" eingestellt. Es wird also bei vernachlässigbarer Totzeit innerhalb einer Periodendauer $T_p$ (z.B. 100 ms) abwechselnd "TopOn" für die Zeit $T_{top}$ und anschließend "BotOn" für die Zeit $T_{bot} = T_p - T_{top}$ eingestellt. Werden die Spannungen der jeweiligen Halbbrücken $U_a$, $U_b$ und $U_c$ entsprechend Figur 1 gegen den unteren Zweig des Spannungszwischenkreises, zwischen dessen Zweigen die Spannung $U_{dc}$ anliegt, so ergibt sich ein Einschaltverhältnis der jeweiligen Halbbrücke von $\tau = T_{top}/T_p$. Die mittlere Spannung ergibt sich dann beispielhaft für die Halbbrücke a zu

$$U_a = \tau_a \cdot U_{dc}.$$

Im stationären Betrieb des Drehfeldsystems sind die zu generierenden Soll-Potentialdifferenzen bzw. die Sollspannungen zwischen den drei Phasen in der Regel dreiphasig sinusförmig. Bei dreiphasigem Wechselstrom beträgt die Phasendifferenz zwischen den einzelnen Phasen jeweils 120°. Die Einschaltverhältnisse der drei Halbbrücken des Umrichters werden dann durch eine Regel der folgenden Art generiert:

$$\tau_a = \hat{\tau} \cdot \cos(\omega t) + \tau_0$$

$$\tau_b = \hat{\tau} \cdot \cos\left(\omega t - \frac{2\pi}{3}\right) + \tau_0$$

$$\tau_c = \hat{\tau} \cdot \cos\left(\omega t - \frac{4\pi}{3}\right) + \tau_0 \, ,$$

wobei $\hat{\tau} = \hat{u}_{ref}/U_{dc}$ die Amplitude der Aussteuerung, $\hat{u}_{ref}$ die Amplitude der Soll-Grundwelle, $U_{dc}$ die Spannung des DC-Zwischenkreises und $\tau_0$ den gemeinsamen Off-Set der Einschaltverhältnisse bezeichnet.

Zur Erzeugung der gewünschten Spannungen zwischen den einzelnen Phasen des Umrichters $U_{ab} = U_a - U_b$, $U_{bc} = U_b - U_c$, $U_{ca} = U_c - U_a$ mittels Pulsweitenmodulation gibt es erkennbar verschiedene Varianten. Da in einem Drehstromsystem nur die Spannungen oder Differenzsignale zwischen den Phasen $U_{ab}$, $U_{bc}$, $U_{ca}$ sinusförmig gefordert werden, kann den Einzelpotentialen $U_a$, $U_b$, $U_c$ ein gemeinsamer Offset $U_0$, auch Nullsystem genannt, überlagert werden. Das Nullsystem $U_0$ wird so gewählt, dass die mittleren Einzelpotentiale an den Umrichterzweigen im Bereich zwischen Null und $U_{dc}$ liegen, respektive $\tau_0$ so gewählt, dass die Einschaltverhältnisse $\tau_a$, $\tau_b$ und $\tau_c$ zwischen Null und Eins liegen. Ein Einschaltverhältnis von $\tau_a = 0$ bedeutet dabei, dass der entsprechende Umrichterzweig a nicht geschaltet bzw. getaktet wird, sondern vielmehr während der gesamten Periodendauer dauerhaft auf das untere Zwischenkreispotential geklemmt wird. Ein Einschaltverhältnis von $\tau_a = 1$ bedeutet, dass der entsprechende Umrichterzweig nicht geschaltet bzw. getaktet wird, sondern vielmehr während der gesamten Periodendauer dauerhaft auf das obere Zwischenkreispotential geklemmt wird.

Mithin lässt sich zeigen, dass es insbesondere für ein dreiphasiges Sinussystem in dem Differenzsignal zwischen den Phasen möglich ist, die Einzelpotentiale der Phasen mittels Pulsweitenmodulation derart zu generieren, dass jeweils nur zwei Halbbrücken getaktet werden, während die jeweils dritte Halbbrücke dauerhaft auf das obere oder auf das untere Zwischenkreispotential geklemmt ist bzw. die Einschaltdauer dieser Halbbrücke entweder Eins oder Null ist. Gegenüber dem Modulationsverfahren, in dem zur Erzeugung der Einzelpotentiale alle drei Halbbrücken getaktet betrieben werden, weist das Modulationsverfahren der Zwei-Phasen-Taktung geringere Schaltverluste auf. Die Schalthäufigkeit ist verringert.

Ein Modulationsverfahren der Zwei-Phasen-Taktung ist beispielsweise aus der EP 036 514 A1 bekannt. Dabei werden jeweils hinsichtlich der Periode des gewünschten sinusförmigen Ausgangssignals für jeweils 60° nur zwei Phasen bzw. zwei der Halbbrücken getaktet, während die jeweils dritte Phase bzw. Halbbrücke dauerhaft auf das obere oder das untere Zwischenkreispotential geklemmt wird. Hierdurch verringern sich gegenüber dem Modulationsverfahren einer Drei-Phasen-Taktung die Schaltverluste in den Schaltelementen. Die Schalthäufigkeit ist um ein Drittel reduziert. Nachteiligerweise erhöhen sich jedoch die Leitungsverluste in den dauerhaft geklemmten Schaltelementen.

In einer anderen Methode der Pulsweitenmodulation für einen dreiphasigen Umrichter, der sogenannten Raumzeigermodulation, werden den einzelnen möglichen Umrichterschaltzuständen Zeiger oder Vektoren zugeordnet, die in einem Zahlentripel den jeweils gegebenen Schaltzustand konkret angeben. Den vorbeschriebenen Schaltzuständen "TopOn" und "BotOn" einer jeweiligen Halbbrücke werden dabei die Zahlenwerte "1" bzw. "0" zugeordnet. Die Halbbrücken a, b, c entsprechen in dem Zahlentripel der ersten, zweiten bzw. dritten Positon. So beschreibt beispielsweise das Zahlentripel (1,1,0) den Schaltzustand des Umrichters, wobei die erste Halbbrücke a und die zweite Halbbrücke b den Schaltzustand "TopOn" und die dritte Halbbrücke c den Schaltzustand "BotOn" aufweisen. Die Zahlentripel (0,0,0) und (1,1,1) werden auch als Null-Vektoren oder Null-Zeiger bezeichnet, da in diesen Schaltzuständen alle Phasen des Umrichters entweder auf das obere oder auf das untere Zwischenkreispotential geklemmt sind. Die Spannungen oder Potentialdifferenzen zwischen den einzelnen Phasen sind somit Null, so dass diese Vektoren keine Relevanz für das Drehstromsystem haben. Bei den Null-Vektoren handelt es sich insofern um inaktive Zustände des Umrichters. Für einen dreiphasigen Umrichter verbleiben somit insgesamt sechs aktive mögliche Schaltkonfigurationen.

Zur Methode der Raumzeigermodulation werden die den aktiven Schaltzuständen zugeordneten Zeiger oder Vektoren entsprechend Figur 2 aufgetragen, wobei sich benachbarte Zeiger jeweils nur in einem Schaltzustand einer Halbbrücke unterscheiden. Die jeweils zwischen zwei benachbarten Vektoren aufgespannten Sektoren werden entsprechend durchnummeriert. Mathematisch handelt es sich bei der Methode der Raumzeigermodulation entsprechend Figur 2 um eine Transformation der dreidimensionalen Beschreibung der Ausgangsgrößen eines dreiphasigen Umrichters in den zweidimensionalen Raum. Die Ausgangsspannungen des Umrichters rotieren dabei als zweidimensionale Vektoren innerhalb des durch die sechs Basisvektoren der Zustände des Umrichters aufgespannten Hexagons entsprechend Figur 2.

Spannungsvektoren zwischen jeweils zwei Basisvektoren oder aktiven Zuständen des Umrichters werden durch die Einschaltdauern der aktiven Zustände generiert. Zur Generierung von Spannungsvektoren, die nicht bis zum Rand des Hexagons reichen, werden innerhalb der Periodendauer Schaltzustände der Null-Vektoren hinzugefügt. Die Einschaltzeiten aller gewählten Schaltzustände addieren sich zur Periodendauer der Pulsweitenmodulation. Werden keine Null-Vektoren hinzugeschaltet, können nur Ausgangsspannungen generiert werden, deren zugehörige Vektoren im Diagramm entsprechend Figur 2 auf dem Rand des Hexagons enden.

Die Generierung eines Spannungsvektors unter intelligenter Zuschaltung der Nullvektoren entspricht dem vorbeschriebenen Modulationsverfahren einer Zwei-Phasen-Taktung. In jedem Sektor werden die Spannungswerte durch benachbarte Basisvektoren oder Schaltzustände des Umrichters eingestellt, die sich jeweils nur im Schaltzustand einer Halbbrücke unterscheiden. Beispielsweise unterscheiden sich die den Sektor 1 aufspannenden Basisvektoren (1, 1, 0) und (1, 0, 0) nur im Schaltzustand der zweiten Halbbrücke. Wird innerhalb eines Sektors konsequent auf jeweils einen Null-Vektor, d.h. vorliegend entweder auf den Null-Vektor (1,1,1) oder auf den Null-Vektor (0,0,0) umgeschaltet, so bleibt zusätzlich entweder die erste oder die dritte Halbbrücke dauerhaft auf das obere oder auf das untere Zwischenkreispotential geklemmt.

Aus Figur 2 wird zugleich ersichtlich, dass Spannungsvektoren, die außerhalb des einbeschriebenen Hexagons enden, nicht erzeugt werden können. Der durch die Basisvektoren vorgegebene maximale Spannungsbetrag kann innerhalb der Sektoren nicht erreicht werden. Die Vektoren des mit dem Umrichter einzustellenden Spannungslimits enden daher entsprechend Fig. 2 auf einem dem Hexagon einbeschriebenen Kreis. Werden während der Ansteuerung des Umrichters Spannungswerte an den Ausgangsklemmen benötigt, die außerhalb des Hexagons liegen, so sind diese auf das sogenannte Hexagon-Limit begrenzt, d.h. die entsprechenden Vektoren enden auf dem Rand des Hexagons. Man spricht dann von einer sogenannten Übermodulation. Der eigentliche notwendige Spannungs- oder Potentialverlauf einer Phase kann nicht mehr generiert werden. Die Spannung zwischen zwei Phasen des Umrichters weist dann einen deformierten Sinus-Verlauf auf, was mit unerwünschten Oberschwingungen im Signal verbunden ist. Die Übermodulation ist z.B. Gegenstand von US2009179608 und XP0005537611 ("Vector PWN modulator with continuous transition to the six-step mode").

Bei der Steuerung oder Regelung eines Umrichters für ein Drehstromsystem mittels Raumzeigermodulation werden generell die das System beschreibenden Größen und insbesondere die Ausgangsgrößen des Umrichters in ein zweidimensionales Koordinatensystem transformiert. Bei der sogenannten feldorientieren Regelung rotiert das zweidimensionale Koordinatensystem zur Beschreibung der Raumzeigergrößen mit dem magnetischen Fluss des Drehstromsystems. Die Koordinaten der Raumzeigergrößen bei der feldorientieren Regelung werden mit d und q bezeichnet. Eine andere Möglichkeit ist die Transformation in ein zweidimensionales statorfestes Koordinatensystem. Die Koordinaten der Raumzeigergrößen in diesem System werden mit $\alpha$ und $\beta$ bezeichnet. Zur Regelung eines Drehstromsystems mittels Raumzeigermodulation werden real gemessene Zustandsgrößen wie Klemmenspannungen oder Motorströme gemessen, mathematisch in die jeweiligen Raumzeigergrößen transformiert und der Umrichter entsprechend der transformierten Raumzeigergrößen auf die gewünschte Schaltzustände zur Erzeugung der Spannungen zwischen den Phasen angesteuert. Insbesondere ist dabei auf die zweidimensionale Darstellung zur Generierung der Ausgangsspannungen entsprechend Figur 2 Bezug genommen.

Bei einer stromgeführten Regelung des Drehstromsystems werden die Ausgangsspannungen des Umrichters in Abhängigkeit von einer Abweichung des Nennstroms von einem Sollstrom, beispielsweise durch Vorgabe eines Sollwertes für die feldbildende Stromkomponente $i_d$ und eines Sollwertes für die momentbildende Stromkomponente $i_q$, angesteuert. Die Regelung eines Drehstromsystems innerhalb des d, q Koordinatensystems hat dabei den Vorteil, dass die zu einer Blindleistung führende Stromkomponente $i_d$, weil feldbildend, und die momentbildende Komponente $i_q$ unmittelbar ersichtlich werden.

Die Ansteuerung eines Umrichters mittels Pulsweitenmodulation anhand von Raumzeigergrößen ist beispielsweise in der US 6,819,078 B2 beschrieben. Dazu wird ein Rechenalgorithmus angegeben, mit dem bei vektorgeregelten Umrichtern aus einem Soll-Spannungsvektor die Einschaltverhältnisse $\tau_a$, $\tau_b$, $\tau_c$ mit einfachen Rechenoperationen berechnet werden kann. Mit dem angegebenen Algorithmus sind Modulationsverfahren sowohl mit einer Drei-Phasen-Taktung als auch mit einer Zwei-Phasen-Taktung möglich. Dabei wird eine Übermodulation dadurch erkannt, dass innerhalb des Algorithmus eine negative Einschaltdauer für einen Null-Vektor auftritt, was der Anforderung eines Spannungswertes außerhalb des hexagonalen Limits entspricht. Im Falle einer Übermodulation wird die dem Spannungswert zugeordnete Raumzeigergröße reskaliert, so dass die Spannungswerte wieder innerhalb des hexagonalen Limits liegen. Eine Übermodulation mit den bekannten Nachteilen wird somit verhindert.

Weiter ist aus der EP 0 840 441 B1 eine feldorientierte Regelung einer Drehfeld-maschine bekannt, wobei die Ausgangsspannungen an der Spannungsdecke geführt sind. Zum Vorsehen einer Spannungsbegrenzung wird bei einer Regelung im d, q- Koordinatensystem der Betrag der momentbildenden Stromkomponente $i_q$ verringert, wenn die Spannungskomponente $U_d$ in Flussrichtung einen Grenzwert erreicht, und es wird die feldbildende Stromkomponente $i_d$ verkleinert, wenn die Spannungskomponente $U_q$ senkrecht zur Flussrichtung einen weiteren Grenzwert erreicht. Entsprechend der begrenzten Spannungskomponenten $U_d$, $U_q$ werden die entsprechenden Phasenspannungen des Umrichters gesteuert. Insbesondere wird für die Grenzwerte die maximal verfügbare Ausgangsspannung des Umrichters gewählt, so dass die für den Umrichter vorgegebenen Einschaltverhältnisse der Halbbrücken kleiner "1" sind bzw. der Umrichter innerhalb des hexagonalen Limits angesteuert wird. Damit wird eine für Last notwendige Spannungsreserve geschaffen, wozu die feldbildende und/oder die momentbildende Stromkomponente verringert ist. Da der Umrichter unterhalb des hexagonalen Limits betrieben wird, ist eine Übermodulation vermieden, die durch Anforderung von nicht realisierbaren Spannungswerten zu Regelschwierigkeiten führen kann.

Entsprechend der EP 2 192 682 A1 wird vorgeschlagen, den Spannungsbedarf einer Drehfeldmaschine über ein Kennlinienfeld für den feldbildenden Strom $i_d$ einzustellen, so dass der Querstromregler sowie der Längsstromregler keine Stellbegrenzung erreichen. Würden die Stellgrößen der Stromregler durch die maximal mögliche Spannung begrenzt, so könnten die Sollstromkomponenten $i_d$, $i_q$ nicht mehr geführt werden und das Verhalten der Maschine würde unbestimmt. Auch hier wird eine Übermodulation also bewusst vermieden.

Aufgabe der Erfindung ist es, ein Verfahren zur Steuerung eines Umrichters mittels Pulsweitenmodulation der eingangs genannten Art anzugeben, bei dem die einzelnen Umrichterschaltelemente möglichst wenig belastet werden. Die Erfindung soll es insbesondere ermöglichen, einen Umrichter mit möglichst kostengünstigen Schaltelementen zu versehen.

Diese Aufgabe wird für ein Verfahren der eingangs genannten Art erfindungsgemäß nach Anspuch 1 dadurch gelöst, dass der Umrichter mit wenigstens zwei verschiedenen Modulationsverfahren betrieben wird, die ausgewählt sind aus der Gruppe von Modulationsverfahren, die eine Ein-Phasen-Taktung, eine Zwei-Phasen-Taktung und eine Drei-Phasen-Taktung enthält, und das zwischen den wenigstens zwei verschiedenen Modulationsverfahren in Abhängigkeit vom Betriebszustand des Drehstromsystems umgeschaltet wird.

Die Erfindung geht dabei von der Überlegung aus, dass nicht ein Verfahren mit den geringsten Gesamtverlusten zum angegebenen Ziel des Einsatzes möglichst kostengünstiger Schaltelemente führt, sondern dass vielmehr der Stress für das am stärksten belastete Schaltelemente minimiert werden muss. Dabei berücksichtigt die Erfindung, dass Stress für Halbleiterschaltelemente zum einen durch Erwärmung aufgrund von Leitungsverlusten und zum anderen durch Erwärmung aufgrund von Schaltungsverlusten entsteht. Im Umrichter wird sich dasjenige Bauelement (Schaltelement oder Diode) durch Leitungsverluste erwärmen, welches gerade Strom führt, und dasjenige Bauelement (Schaltelement oder Diode) durch Schaltungsverluste erwärmen, welches vom stromsperrenden in den stromleitenden Zustand oder umgekehrt wechselt.

Die Erfindung erkennt nun weiter, dass sich die Modulationsverfahren einer Drei-Phasen-Taktung, einer Zwei-Phasen-Taktung und einer Ein-Phasen-Taktung hinsichtlich der Schaltzyklen, der Stromleitungszyklen und der diesbezüglichen Aufteilung auf die Schaltelemente voneinander unterscheiden. Wird ein Schaltelement weniger geschaltet, so verringert sich sein Stress durch Erwärmung aufgrund von Schaltverlusten auf Kosten des Stresses durch Erwärmung aufgrund von Leitungsverlusten. Wird eine Halbbrücke dauerhaft auf das untere oder auf das obere Zwischenkreispotential geklemmt, so wird zudem das jeweils eingeschaltete Schaltelement der Halbbrücke einseitig belastet, wohin gegen das andere Schaltelement keinen Stress erfährt. Ein Modulationsverfahren, welches eine Halbbrücke insofern für gewisse Zeiträume einseitig klemmt, führt somit zu einer höheren Belastung einzelner Schaltelemente, weil die Verluste in einer Halbbrücke asymmetrisch aufgeteilt werden. Andererseits spielt dieser Umstand keine Rolle mehr, wenn sich bei höheren Drehfeldfrequenzen die einseitige Durchschaltung einzelner Schaltelemente wiederrum auf alle Schaltelemente des Umrichters zyklisch verteilt.

Insofern erkennt die Erfindung, dass sich bei einem Betrieb des Umrichters mit ausgewählten Modulationsverfahren bei unterschiedlichen Betriebszuständen des Drehstromsystems der Stress für jedes einzelne Schaltelement minimieren lässt. Die Erfindung eröffnet insofern die Möglichkeit, den Umrichter so zu betreiben, dass möglichst kostengünstige Schaltelemente eingesetzt werden können. In Abhängigkeit vom Betriebszustand des Drehstromsystems werden die Modulationsverfahren derart ausgewählt, dass sich jeweils der niedrigste Stress für ein einzelnes Schaltelement ergibt.

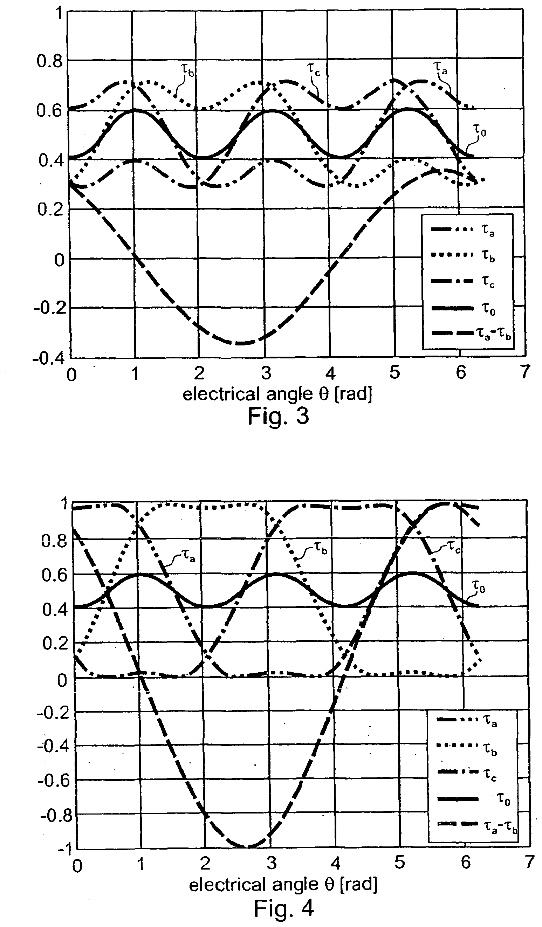

Die einzelnen Modulationsverfahren werden zum Verständnis der Erfindung im Folgenden unter Zuhilfenahme der Figuren 3 - 8 näher beschrieben.

Die Figuren 3 - 8 zeigen zeitliche Verläufe der Einschaltverhältnisse $\tau_a$, $\tau_b$, $\tau_c$ der jeweiligen Halbbrücken eines dreiphasigen Umrichters, des jeweils gewählten Nullsystems $\tau_0$ sowie der gebildeten Differenz $\tau_a - \tau_b$. Die Verläufe der Einschaltverhältnisse $\tau_a$, $\tau_b$, $\tau_c$ entsprechen den Verläufen der Einzelpotentiale der den jeweiligen Halbbrücken zugeordneten Phasen. Der Verlauf der Differenz $\tau_a - \tau_b$ entspricht dem Verlauf der Spannung zwischen den Phasen der entsprechenden Halbbrücken a und b.

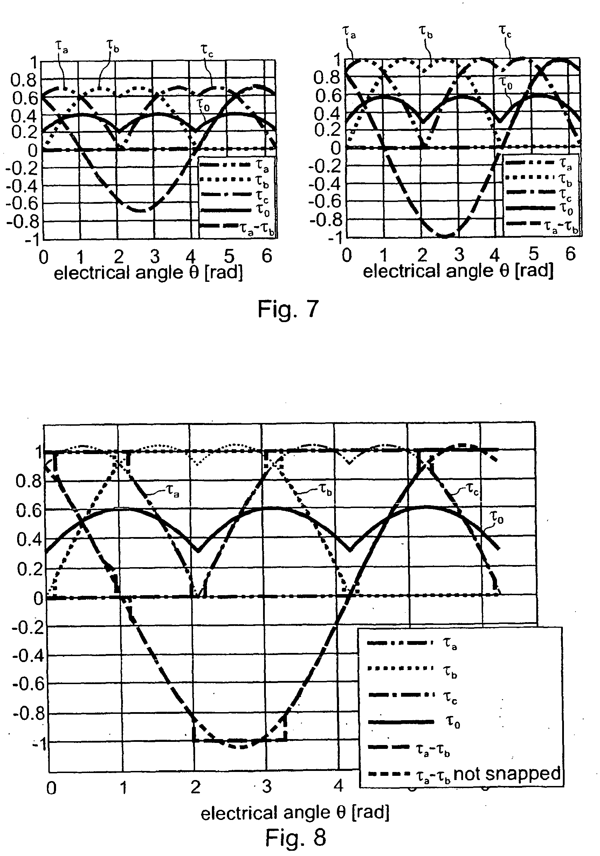

Es wird unmittelbar ersichtlich, dass mit Ausnahme von Figur 8, die eine Übermodulation zeigt, die Differenz $\tau_a - \tau_b$ unabhängig von der Wahl des Nullsystems $\tau_0$ einen sinusförmigen Verlauf zeigt. Insofern wird der Freiheitsgrad hinsichtlich der Wahl der Modulationsverfahren erkennbar, sofern es wie bei einem Drehstromsystem, und insbesondere bei einer Drehfeldmaschine, nur auf die Differenzspannung zwischen den einzelnen Phasen des Umrichters ankommt.

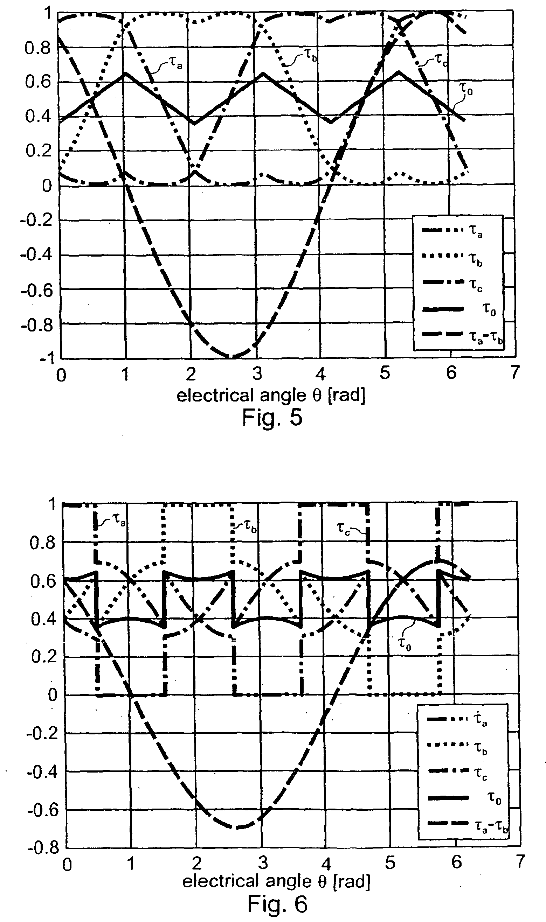

In den Figuren 3 - 5 sind Modulationsverfahren einer Drei-Phasen-Taktung dargestellt. Das Nullsystem $\tau_0$ weist in den Figuren 3 und 4 einen Gleichanteil und eine dritte Oberwelle zur Grundwelle des Differenzsignals auf. In Figur 5 setzt sich das Nullsystem $\tau_0$ aus einem Gleichanteil und einer Dreiecksfunktion zusammen. Der Gleichanteil ist jeweils mit einem Wert von 0,5 gewählt. In Figur 3 ist die Amplitude $\hat{\tau}$ der Aussteuerung mit 0,2 kleiner gewählt als in Figur 4 mit einem Wert von $\hat{\tau}$ von 0,577. Der letztgenannte Wert stellt die maximal mögliche verzerrungsfreie Grundschwingungsamplitude dar. Man erkennt dies in Figur 4 daran, dass die Einschaltverhältnisse der einzelnen Halbbrücken sich überwiegend im Bereich von "Eins" bewegen, was einer Ansteuerung des Umrichters an der Spannungsdecke entspricht.

Das Modulationsverfahren einer Drei-Phasen-Taktung ist dadurch gekennzeichnet, dass alle drei Halbbrückenzweige während einer Periodendauer der Pulsweitenmodulation getaktet werden, d.h. das obere und das untere Schaltelement jeder Halbbrücke werden jeweils komplementär angesteuert und ändern während jeder Periode das Schaltmuster. Die Ausgestaltung des Nullsystems bzw. der Nullspannung ist dabei offen. Üblich sind beispielsweise ein Gleichanteil oder ein Gleichanteil mit überlagerten Oberschwingungen der Grundwelle, die das Differenzsignal zwischen jeweils zwei Phasen aufweisen soll.

Der in Figur 5 dargestellt Verlauf entspricht einer Pulsweitenmodulation entsprechend einer Raumzeigermodulation gemäß Figur 2. Demnach werden sektorenweise die jeweiligen Spannungskomponenten aus den den Sektor begrenzenden Basisvektoren unter Zuschaltung jeweils eines der Nullvektoren gebildet. Jeder Sektor entsprechend Figur 2 entspricht hierbei einem 60°-Abschnitt entsprechend der in Figur 5 dargestellten Grundwelle des Differenzsignals.

Die Vorteile einer Drei-Phasen-Taktung liegen in der gleichmäßigen Verteilung der Leitungsverluste auf alle Bauelemente. Nachteilig an dem Modulationsverfahren einer Drei-Phasen-Taktung sind die permanent auftretenden Schaltverluste in den Schalt- bzw. Bauelementen.

In den Figuren 6 - 7 sind nun die entsprechenden zeitlichen Verläufe der Einschaltverhältnisse $\tau_a$, $\tau_b$, $\tau_c$, des Nullsystems $\tau_0$, sowie der Differenz der Einschaltverhältnisse $\tau_a - \tau_c$ für Modulationsverfahren einer Zwei-Phasen-Taktung dargestellt. Da die Wahl des Nullsystems innerhalb gewisser Grenzen frei ist, kann das Nullsystem so gestaltet werden, dass jeweils nur zwei der drei Halbbrücken während einer Periode der Pulsweitenmodulation ihr Schaltmuster ändern. Das Potential der jeweils dritten Halbbrücke bleibt dauerhaft entweder auf das obere oder auf das untere Zwischenkreispotential geklemmt. Das Modulationsverfahren einer Zwei-Phasen-Taktung ist auch unter dem Begriff einer Zwischenkreisgeklemmten Pulsweitenmodulation (engl.: "bus clamped PWM") bekannt. Bezogen auf eine komplette Periode des gewünschten Differenzsignals zwischen zwei Phasen bleibt immer für 120° eine Halbbrücke mit der oberen oder der unteren (was bevorzugt ist) Zwischenkreisschiene geklemmt oder wird abwechselnd für jeweils 60° auf die untere Schiene und dann eine andere Halbbrücke für 60° auf die obere Schiene geklemmt.

In Figur 6 ist das Modulationsverfahren einer Zwei-Phasen-Taktung gemäß der "60° bus clamped" - Methode und in den Figuren 7 das Modulationsverfahren einer Zwei-Phasen-Taktung gemäß der "120° bus clamped" - Methode gezeigt. In den Figuren 6 und der linken Abbildung gemäß Figur 7 ist der Wert der Amplitude $\hat{\tau}$ mit 0,4 gewählt. In der rechten Abbildung gemäß Figur 7 ist die Amplitude mit einem Wert von $\hat{\tau}$ 0,577, also der maximal möglichen verzerrungsfreien Grundschwingungsamplitude vorgegeben. Das jeweilige Nullsystem $\tau_0$ vergibt sich aus der entsprechenden Rechenvorschrift für die gewünschte Zwei-Phasen-Taktung.

Entsprechend Figur 6 werden immer nur zwei Phasen getaktet, wobei die jeweils dritte Phase für 60° auf abwechselndes Zwischenkreispotential dauerhaft geklemmt wird. In den Figuren 7 werden ebenfalls jeweils nur zwei Phasen getaktet, wobei jedoch die jeweils dritte Phase für 120° auf dasselbe Zwischenkreispotential dauerhaft geklemmt ist.

Das Modulationsverfahren einer Zwei-Phasen-Taktung weist die Vorteile eines insgesamt um ein Drittel reduzierten Schaltverlustes gegenüber dem Modulationsverfahren einer Drei-Phasen-Taktung auf. Die Schalthäufigkeit der Schaltelemente ist um ein Drittel geringer. Nachteilig leiten jedoch die dauerhaft geklemmten Schaltelemente den Strom zu 100 % und können dadurch vor allem bei langsamen Drehfeldfrequenzen mehr gestresst werden als bei dem Modulationsverfahren einer Drei-Phasen-Taktung.

In Figur 8 ist nun das Modulationsverfahren einer Ein-Phasen-Taktung dargestellt. Dabei ändert jeweils nur eine der drei Halbbrücken während einer Periode der Pulsweitenmodulation ihr Schaltmuster. Ausgehend von der rechten Abbildung gemäß Figur 7 wird ersichtlich, dass das dargestellte Modulationsverfahren gemäß Figur 8 möglich wird, indem der Umrichter theoretisch oberhalb der Spannungsdecke betrieben wird, also theoretische Einschaltverhältnisse für die einzelnen Halbbrücken von > 1 gefordert werden. Mit anderen Worten führt das Modulationsverfahren einer Ein-Phasen-Taktung zu einer Übermodulation, so dass die Grundwelle des Ausgangssignals als Differenz zwischen jeweils zwei Phasen nicht mehr verzerrungsfrei dargestellt werden kann. In Figur 8 sind hierzu die eigentlich geforderten Einschaltverhältnisse und die sich ergebenden Differenzsignale gegenüber den real eingestellten dünn gestrichelt dargestellt. Das sinusförmige Differenzsignal $\tau_a - \tau_b$ ist gegenüber einem gewünschten Sinusverlauf verzerrt.

Das Modulationsverfahren einer Ein-Phasen-Taktung weist den Vorteil eines insgesamt um zwei Drittel reduzierten Schaltverlustes gegenüber dem Modulationsverfahren einer Drei-Phasen-Taktung auf. Die Einschalthäufigkeit der Umschaltelemente ist um zwei Drittel reduziert. Nachteilig an einem Modulationsverfahren einer Ein-Phasen-Taktung ist die Verzerrung der Grundwelle. Zudem erfordert eine Ein-Phasen-Taktung eine spezielle Auslegung des Regelkreises, da für die Halbbrücken theoretische Einschaltverhältnisse vorgegeben werden, die der Umrichter real nicht mehr im Stande ist zu liefern.

Im Übermodulationsbereich wird von den Stromreglern bei einer feldorientierten Regelung mehr Ausgangsspannung verlangt, als tatsächlich ausgegeben werden kann. In diesem Fall wird statt des eigentlich benötigten Einschaltverhältnisses von > 1 das maximal mögliche Einschaltverhältnis von "eins" gewählt. Im Übermodulationsbereich werden große Mengen an Oberschwingungsströmen erzeugt. Die Stromregler sind dann stark von Oberschwingungsströmen belastet. Strom-reglersättigung und oszillierende Operationen führen zu Leistungsabfall.

Im Gegensatz zum bisherigen Stand der Technik, wonach Übermodulation zwar vorgesehen wird, dies jedoch durch die Regelung nach Möglichkeit verhindert werden soll, sieht die vorliegende Erfindung bewusst das Modulationsverfahren einer Ein-Phasen-Taktung als eine der Möglichkeiten vor, den Umrichter betriebsabhängig anzusteuern. Das Modulationsverfahren einer Ein-Phasen-Taktung ermöglicht es nämlich gerade bei hohen Spannungswerten durch entsprechende Stromregelung einen Teil der Verlustwärme von den Schaltelementen des Umrichters auf das Drehstromsystem zu übertragen. Insbesondere kann bei hohen Spannungswerten bewusst Blindstrom generiert werden, der zu Wirkungsgradeinbußen am Drehstromsystem führt. Für das Gesamtsystem bestehend aus Umrichter und Drehstromsystem braucht sich jedoch der Wirkungsgrad nicht verschlechtern oder wird sogar verbessert, wobei der Stress des einzelnen Schaltelementes des Umrichters verringert ist. Wie nachfolgend noch erläutert werden wird, kann das Modulationsverfahren einer Ein-Phasen-Taktung bewusst tolerant gegenüber einer Verzerrung der Grundwelle ausgelegt werden und die Übermodulation durch einen geeigneten Sollwert für den feldbildenden Strom provoziert werden.

Die dargestellten Modulationsverfahren einer Ein-, Zwei- und Drei-Phasen-Taktung sind demnach mit unterschiedlichen Vorteilen und Nachteilen belegt. Je nach Betriebszustand des Drehstromsystems bringt dabei die eine oder die andere Variante mehr Vorteile. Die Erfindung sieht daher vor, während des Betriebs des Drehstromsystems je nach dessen Betriebszustand zwischen wenigstens zwei der beschriebenen drei Varianten umzuschalten.

Bevorzugt wird der Umrichter während des Starts und/oder bei niedrigen Drehfeldfrequenzen des Drehstromsystems mit dem Modulationsverfahren der Drei-Phasen-Taktung betrieben. Bei dem Modulationsverfahren einer Zwei-Phasen-Taktung entstehen in dem gerade dauerhaft geklemmten Zweig zwar keine Schaltverluste. Nachteil ist jedoch, dass die Leitungsverluste nicht auf das obere und das untere Schaltelement einer Halbbrücke verteilt werden, sondern alleine in dem angeschalteten Schaltelement-Dioden-Paar einer Halbbrücke anfallen. Gerade beim Start eines Drehstromsystems, insbesondere einer Drehfeldmaschine, aus dem Stillstand heraus kann die Verweilzeit in einem 60°-Abschnitt eines Modulationsverfahrens der Zwei-Phasen-Taktung sehr lange sein.

Während bei der Drei-Phasen-Taktung die anfallenden Leitungsverluste auf das obere und auf das untere Schaltelement-Dioden-Paar einer Halbbrücke einigermaßen gleichmäßig verteilt werden, wird bei der Zwei-Phasen-Taktung die Leitungsverlustwärme auf ein einziges Schaltelement-Dioden-Paar konzentriert. Es muss daher jedes einzelne Schaltelement-Dioden-Paar so ausgelegt werden, dass kontinuierliche und dauerhafte Leitungsverlustwärme die Bauteile nicht zerstört. Dies führt dazu, dass die eingesetzten Bauelemente wegen des grundsätzlich gegebenen Betriebszustands beim Start größer ausgelegt werden müssen, als dies erforderlich wäre, wenn im Betriebszustand "Start" mit einer Drei-Phasen-Taktung gearbeitet werden würde.

Daher ist bevorzugt vorgesehen, den Umrichter während des Starts und/oder bei niedrigen Drehfeldfrequenzen mit dem Modulationsverfahren der Drei-Phasen-Taktung zu betreiben.

Erst wenn der Umrichter oberhalb einer Mindestdrehfeldfrequenz des Drehstromsystems betrieben wird, ist vorteilhafterweise vorgesehen, dann auf das Modulationsverfahren der Zwei-Phasen-Taktung umzuschalten. Das Vorsehen einer Mindestdrehfeldfrequenz erlaubt es, dass die Verweildauern der einzelnen Schaltelemente in einem 60° oder in einem 120°-Abschnitt so kurz sind, dass die lokale Erwärmung ein kontinuierliches Einschalten während dieser Verweildauer erlaubt.

Werden beide Varianten kombiniert, kann die in den Schaltelementen entstehende Verlustleistung gleichmäßig auf alle Schalter verlagert werden.

Im Grenzfall können somit kleinere und damit kostengünstigere Schaltelemente oder kleinere Kühlkörper eingesetzt werden, als wenn gemäß Stand der Technik der Umrichter entweder nach dem Modulationsverfahren einer Drei-Phasen-Taktung oder nach dem Modulationsverfahren einer Zwei-Phasen-Taktung betrieben werden würde.

Bevorzugt ist die Mindestdrehfeldfrequenz zwischen 8Hz und 12Hz gewählt. Es hat sich hierbei herausgestellt, dass ein Betrieb des Umrichters nach dem Modulationsverfahren einer Zwei-Phasen-Taktung unterhalb dieser Frequenz zu einer unerwünschten und dauerhaften Erwärmung der Schaltelemente führt. Wird unterhalb dieser Frequenz auf das Modulationsverfahren der Drei-Phasen-Taktung umgeschaltet, so kann die Verlustwärme durch Leitung im ausgeschalteten Zustand eines Schaltelements wieder abgegeben werden. Bei einer Zwei-Phasen-Taktung führt jedoch die höhere Verweildauer der Schaltelemente im durchgeschalteten Zustand zu einer gewissen Aufsummierung der Verlustwärme durch Leitung. Insbesondere ist die Mindestdrehfeldfrequenz mit einem Wert von 1 Hz festgelegt.

Im Falle einer Drehfeldmaschine zum Antrieb der Trommel einer Waschmaschine wird die Drei-Phasen-Taktung bevorzugt während der Startphase oder während niedriger Drehzahl zur Auflockerung von Wäsche angewendet. Bei einem Betriebszustand mit Waschdrehzahl, also bei Drehzahlen von größer als 40 Umdrehungen pro Minute (rpm) wird weiter bevorzugt auf die Zwei-Phasen-Taktung umgeschaltet.

In einer weiteren bevorzugten Ausgestaltung wird der Umrichter in einem Betrieb des Drehstromsystems mit Ausgangsspannungen oberhalb eines Mindestspannungswertes mit dem Modulationsverfahren der Ein-Phasen-Taktung betrieben. Die Ein-Phasen-Taktung wird dann gewählt, wenn beispielsweise maximale Grundwellenspannung ausgegeben werden soll, um die Schaltverluste weiter zu reduzieren und um die volle Spannung aus dem Spannungszwischenkreis für das Drehstromsystem zur Verfügung zu haben.

Bevorzugt wird der Mindestspannungswert zwischen 60% und 70% des möglichen Spannungsstellbereiches des Umrichters gewählt. Oberhalb dieses Mindestspannungswertes hat es sich gezeigt, dass eine Umschaltung von der Zwei-Phasen-Taktung auf die Ein-Phasen-Taktung Vorteile hinsichtlich der maximalen auftretenden Stressbelastung eines Schaltelements des Umrichters zeigt. Die Umschaltung wird durch geeignete Steuer- bzw. Regelverfahren durchgeführt. Dabei wird zweckmäßigerweise die Ein-Phasen-Taktung begünstigt, indem Maßnahmen ergriffen werden, so dass sich oberhalb des angegebenen Mindestspannungswertes die vom Umrichter ausgegebenen Spannungen an der Spannungsdecke des Umrichters bewegen. Beispielsweise kann dies durch Anhebung eines Stromsollwertes, bei der feldorientierten Regelung insbesondere durch eine Anhebung des Sollwertes für den feldbildenden Strom $i_d$ geschehen. Da die Anhebung der Stromwerte zu einer Anhebung der Klemmenspannung führt (siehe beispielsweise EP 0 840 441 B1) kann auf diese Weise der Wert der auszugebenden Ausgangsspannungen an den Wert der Zwischenkreisspannung herangeführt werden. Entsprechend Figur 2 bedeutet dies, dass oberhalb des Mindestspannungswertes die Spannungsvektoren bei der Raumzeigermodulation an den Rand des Hexagons angehoben werden. Die Verringerung des Stress-Grenzwertes eines einzelnen Schaltelements des Umrichters wird hierbei durch eine Wirkungsgradverschlechterung des Drehstromsystems erkauft, was jedoch insgesamt betrachtet den Gesamtwirkungsgrad des Systems nicht verschlechtern muss und zudem die Möglichkeit bietet, in den Umrichter günstigere Bauelemente einzusetzen oder kleinere Kühlkörper zu verwenden.

Die Erfindung sieht in einer weiter vorteilhaften Ausführungsvariante vor, dass zum Modulationsverfahren der Ein-Phasen-Taktung bei einer Feldsteuerung ein feldbildender Strom derart eingestellt wird, dass hinsichtlich der Ausgangsspannungen Übermodulation auftritt. In diesem Fall wird die benötigte Spannungsamplitude des Umrichters über den Blindstrom variiert. So wächst bei einer feldorientierten Regelung die Ausgangsspannung bei gegebener Drehzahl der Maschine mit dem feldbildenden Strom $i_d$ und fällt mit negativem $i_d$. Um zum Beispiel mit begrenzter Ausgangsspannung eine permanent erregte Synchronmaschine bei derart hohen Drehzahlen betreiben zu können, dass die Leerlaufspannung größer ist als die verfügbare Ausgangs- oder Klemmenspannung, wird ein negativer $i_d$-Strom in die Maschine eingeprägt, also ein sogenannter Feldschwächungsstrom. Die Vorgabe der Größe des Feldschwächungsstromes erfolgt dabei über Tabellen oder über einen Regler für Spannungsamplituden. Bei diesen aus dem Stand der Technik bekannten Verfahren wird Übermodulation durch geeignete Regelalgorithmen unterdrückt.

Vorliegend wird nun bewusst ein feldbildender Strom derart vorgegeben, dass die benötigten Spannungsvektoren oder Spannungsamplituden sich bei Betriebszuständen oberhalb der Mindestspannungswerte, also insbesondere bei Feldschwächedrehzahlen, signifikant an der Spannungsdecke bzw. im Bereich des hexagonalen Limits bewegen.

Die Erfindung sieht insofern in einer Weiterbildung vor, ausdrücklich Feldverstärkung zu betreiben, wozu insbesondere bei einer permanent erregten Synchronmaschine zur Durchführung der Ein-Phasen-Taktung ein positiver feldbildender Strom eingeprägt oder eine Induktionsmaschine oberhalb des Nennflusses betrieben wird.

Im Falle einer Drehfeldmaschine zum Antrieb der Trommel einer Waschmaschine wird im Falle des Betriebszustandes "Schleudern", also bei Erreichen von Schleuderdrehzahlen, d.h. von Drehzahlen von mehr als 300 Trommelumdrehungen pro Minute, auf das Modulationsverfahren der Ein-Phasen-Taktung umgeschaltet.

Zusätzlich zu den beschriebenen Maßnahmen, die benötigten Ausgangsspannungen, Spannungsvektoren oder Spannungsamplituden (je nach Modellbeschreibung) in die Nähe der Maximalspannungswerte auf das hexagonale Limit anzuheben, sieht die Erfindung zweckmäßigerweise weiter vor, zum Modulationsverfahren der Ein-Phasen-Taktung bei einer geforderten theoretischen Einschaltzeit eines Schaltelements oberhalb eines oberen Schwellwertes dessen Einschaltzeit auf 100 % anzuheben und/oder bei einer geforderten theoretischen Einschaltzeit eines Schalterelements unterhalb eines unteren Schwellwertes dessen Einschaltzeit auf 0 % abzusenken. Diese Maßnahme kann insbesondere mittels einer nicht linearen Fangfunktion ausgestaltet werden, die in einem Steuergerät zur Pulsweitenmodulation, kurz auch Pulsweitenmodulator genannt, integriert ist.

Mittels der nicht linearen Fangfunktion bzw. dem abgeänderten Modulationsverfahren der Ein-Phasen-Taktung werden die theoretisch noch möglichen Einschaltdauern bzw. Einschaltverhältnisse, die in der Nähe des Spannungslimits liegen, bereits auf das Spannungslimit angehoben bzw. abgesenkt, soweit sie sich bezüglich der angegebenen Grenzen diesem Spannungslimit annähern. Dabei haben sich vorteilhafterweise Einschaltzeiten für den oberen Schwellwert zwischen 93 % und 97 % und für den unteren Schwellwert zwischen 2 % und 6 % als vorteilhaft erwiesen. Insbesondere werden der obere Schwellwert mit 95 % und der untere Schwellwert mit 3 % festgelegt.

Das entsprechende Resultat eines Modulationsverfahrens einer Ein-Phasen-Taktung ist in Figur 8 bereits dargestellt. Hier erkennt man die Fangfunktion daran, dass der eigentlich theoretische Verlauf der Einschaltverhältnisse $\tau_a$, $\tau_b$, $\tau_c$ vor Erreichen des Grenzwertes von 1 oder 0 bereits auf diese Werte angehoben bzw. abgesenkt wird. Die hier implementierte Fangfunktion ist dadurch gekennzeichnet, dass ein Modulationsverfahren einer Zwei-Phasen-Taktung nach der "120° bus clamped"-Methode in Übermodulation geht und das Signal vor Erreichen der Werte 1 und 0 "geschnappt" und auf den entsprechenden Maximalwert angehoben bzw. abgesenkt wird. Theoretisch wird dabei eine Amplitude von $\hat{\tau}_{theoretisch} = 0{,}6$ erzielt. Der ursprünglich gewünschte Sinusverlauf des Differenzsignals wird verzerrt. Man erkennt den theoretisch geforderten Verlauf, gegenüber dem mit dicker Linie das Resultat entsprechend der Ein-Phasen-Taktung mit Fangfunktion eingezeichnet ist.

Das in Figur 8 dargestellte Modulationsverfahren einer Ein-Phasen-Taktung hat den weiteren Vorteil, dass bereichsweise überhaupt keine Halbbrücke ihr Schaltmuster ändert. Dies geschieht in den Bereichen, in denen die Fangfunktion aktiv ist. Auch hierdurch werden Schaltverluste weiter minimiert.

Weiter wird erfindungsgemäß ein Umrichter enthaltend mit drei Halbbrücken mit jeweils zwei in Serie geschalteten Schaltelementen angegeben, wobei ein Pulsweitenmodulator vorgesehen ist, der zur Ansteuerung des Umrichters entsprechend dem vorgenannten Verfahren ausgebildet ist.

Ausführungsbeispiele der Erfindung werden anhand einer Zeichnung näher erläutert. Dabei zeigen:

Fig. 1      das Schaltbild eines bekannten dreiphasigen Umrichters,

Fig.2      eine Hexagon-Darstellung der Raumzeigermodulation eines dreiphasigen Umrichters,

Fig. 3 - 8      den jeweils zeitlichen Verlauf der Einschaltverhältnisse der Halbbrücken, des gewählten Nullsystems und des Phasen-Differenzsignals für verschieden Modulationsverfahren,

Fig. 9      den gemessenen Verlauf der Ausgangsspannung einer Phase eines Umrichters, der mit einer Zwei-Phasen-Taktung betrieben wird,

Fig. 10      den gemessenen Verlauf einer Ausgangsspannung einer Phase eines Umrichters, der mit einer Ein-Phasen-Taktung mit Fangfunktion betrieben wird,

Fig. 11      das Hexagon der Raumzeigermodulation mit eingezeichnetem Spannungslimit und

Fig. 12      eine Darstellung der Ein-Phasen-Taktung mit Fangfunktion im Hexagon der Raumzeigermodulation.

Die Figuren 1 - 2 sowie 3 - 8 sind bereits im Zusammenhang der Erfindungsbeschreibung ausführlich erläutert. Entsprechend wird auf die diesbezüglichen Beschreibungspassagen verwiesen.

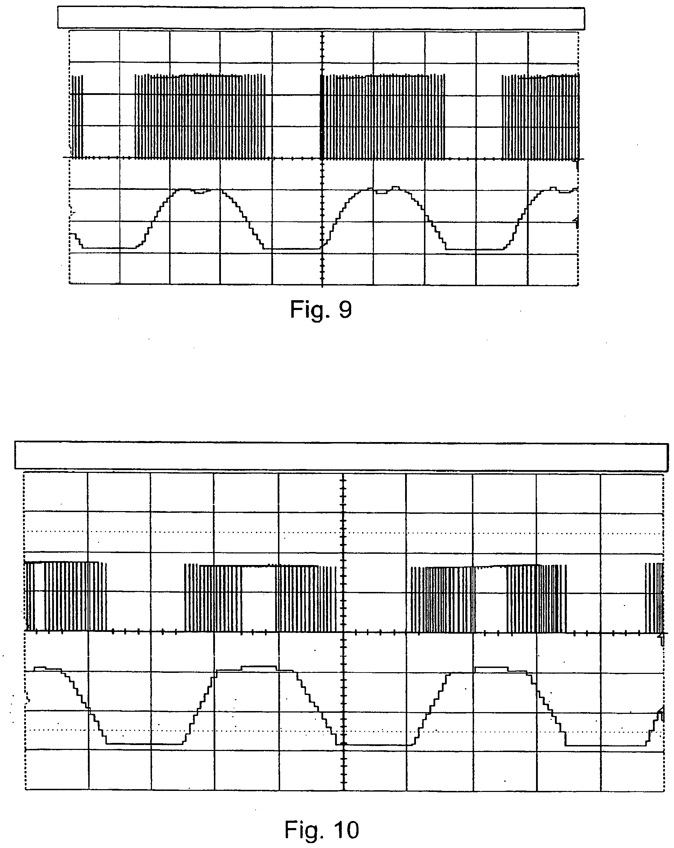

In Fig. 9 ist ein mittels Oszilloskop gemessener Verlauf einer Ausgangsspannung der Phase eines dreiphasigen Umrichters (unterer Verlauf) mit den entsprechenden Schaltzyklen der zugeordneten Halbbrücke (oberer Verlauf) dargestellt. Der Umrichter ist hierbei mit einem Modulationsverfahren der Zwei-Phasen-Taktung gemäß der "120° bus clamped"-Methode betrieben. Entsprechend ist die zugeordnete Halbbrücke für jeweils 120° dauerhaft auf das untere Zwischenkreispotential geklemmt. In diesem Bereich findet keine Taktung der Schaltelemente der Halbbrücke statt, was deutlich am oberen Verlauf erkennbar ist. Die Spannungsamplitude ist derart gewählt, dass diese sich am Maximum in der Nähe des Spannungslimits bewegt. Insofern tritt sporadisch Übermodulation auf, was am oberen Verlauf daran zu erkennen ist, dass die Taktung abschnittsweise im Bereich der Maxima des unteren Verlaufes "aussetzt".

In Fig. 10 ist der entsprechende Verlauf wie in Fig. 9 dargestellt, wobei nun jedoch Maßnahmen zur Begünstigung der Ein-Phasen-Taktung vorgenommen sind. Dabei wird beispielsweise der Sollwert für die feldbildende Stromkomponente $i_d$ angehoben, so dass die Spannungsamplitude in der dargestellten Phase vergrößert ist. Es wird ersichtlich, dass nun an den Maxima der dargestellten Spannungsverläufe Übermodulation dauerhaft auftritt. Die Regelung fordert insofern beständig für die Halbbrücke nicht mehr realisierbare Einschaltzeiten oberhalb von 100 % bzw. Einschaltverhältnisse oberhalb eines Wertes 1. An den Maxima des unteren Verlaufes findet keine Taktung der Halbbrücke mehr statt. Vielmehr ist die Halbbrücke dort dauerhaft an das obere Zwischenkreispotential geklemmt. Durch Implementieren einer Fangfunktion kann die Ein-Phasen-Taktung entsprechend Fig. 10 weiter ausgedehnt werden, so dass bereichsweise sogar keine der Halbbrücken mehr getaktet ist.

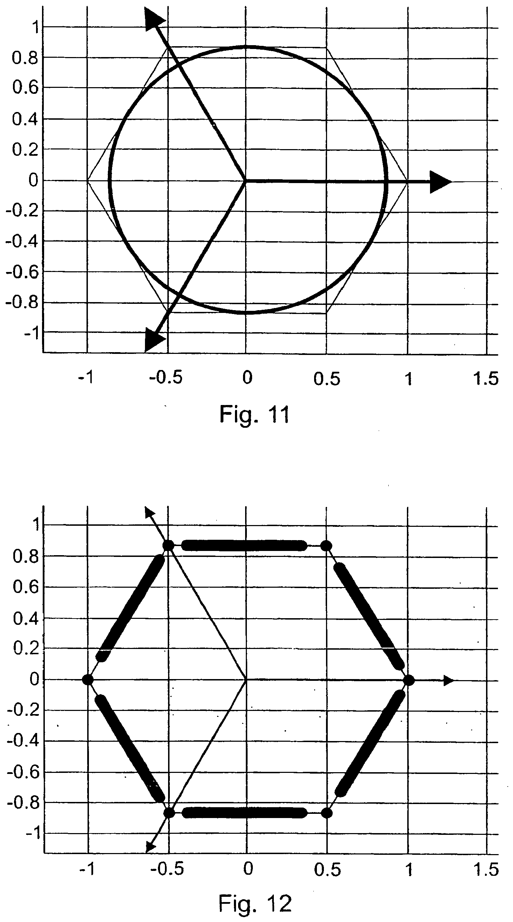

In den Figuren 11 und 12 ist jeweils das Hexagon einer Pulsweitenmodulation mittels Raumzeigermodulation dargestellt. In Figur 11 ist das Hexagon mit einem einbeschriebenen Kreis dargestellt. Dieser Kreis stellt die maximal mögliche Spannungsamplitude dar, die zu einer verzerrungsfreien Grundwelle führt. Der Rand des Hexagons wird nicht verlassen.

In Fig. 12 ist ein Modulationsverfahren mittels Ein-Phasen-Taktung dargestellt, wobei zusätzlich eine Fangfunktion implementiert ist. Die Ein-Phasen-Taktung wird in diesem Modell der Raumzeigermodulation dadurch erkennbar, dass die Spannungsvektoren in jedem Sektor des Hexagons jeweils unmittelbar am Rand des Hexagons enden. Insofern wird innerhalb jedes Sektors auf das Zuschalten der Nullvektoren verzichtet. Der entsprechende Spannungsvektor wird ausschließlich mit den benachbarten Basisvektoren generiert, was die Taktung jeweils nur einer Halbbrücke bedeutet. In der Nähe der Ecken des Hexagons wird die implementierte Fangfunktion dadurch erkennbar, dass die generierten Spannungsvektoren auf den jeweiligen Basisvektor geklappt werden, ehe sie diesen tatsächlich erreichen. In der Nähe der Ecken des Hexagons wird insofern der Spannungsvektor ausschließlich durch einen Basisvektor dargestellt. Dies bedeutet, dass in den Bereichen der Ecken keine der Halbbrücken getaktet ist.

Der Betrieb eines dreiphasigen Umrichters mit einem Modulationsverfahren einer Ein-Phasen-Taktung mit implementierter Fangfunktion, wie dies vorbeschrieben ist, stellt auch eine eigenständige erfinderische Idee dar, die durch die vorbeschriebenen Merkmale der anderen Modulationsverfahren nicht beschränkt ist und zu deren Durchführung es auch nicht notwendig ist, in andere Modulationsverfahren umzuschalten.

**Patentansprüche**

1.      Verfahren zur Steuerung eines dreiphasigen Umrichters mit Spannungszwischenkreis mittels Pulsweitenmodulation zur Versorgung eines Drehstromsystems, insbesondere einer Drehfeldmaschine, wobei der Umrichter mit wenigstens zwei verschiedenen Modulationsverfahren betrieben wird, zwischen denen in Abhängigkeit vom Betriebszustand des Drehstromsystems umgeschaltet wird, **dadurch gekennzeichnet,** **dass** der Umrichter während des Starts und/oder bei niedrigen Drehfeldfrequenzen des Drehstromsystems mit dem Modulationsverfahren einer Drei-Phasen-Taktung betrieben wird, dass der Umrichter oberhalb einer Mindestdrehfeldfrequenz des Drehstromsystems mit dem Modulationsverfahren einer Zwei-Phasen-Taktung betrieben wird, und dass der Umrichter in einem Betrieb des Drehstromsystems mit Ausgangsspannungen oberhalb eines Mindestspannungswertes, der zwischen 60% und 70% des möglichen Spannungsstellbereiches des Umrichters gewählt ist, mit dem Modulationsverfahren einer Ein-Phasen-Taktung betrieben wird, wobei zum Modulationsverfahren der Ein-Phasen-Taktung bei einer Feldsteuerung ein feldbildender Strom eingestellt wird, so dass hinsichtlich der Ausgangsspannungen Übermodulation auftritt.

2. Verfahren nach Anspruch 1,
   **dadurch gekennzeichnet,**
   **dass** die Mindestdrehfeldfrequenz zwischen 8 Hz und 12 Hz gewählt wird.

3. Verfahren nach Anspruch 1 oder 2,
   **dadurch gekennzeichnet,**
   **dass** zum Modulationsverfahren der Ein-Phasen-Taktung bei einer Steuerung mittels Raumzeigermodulation die ausgegebene Spannung sektorenweise auf das hexagonale Limit gesteuert wird.

4. Verfahren nach einem der vorhergehenden Ansprüche,
   **dadurch gekennzeichnet,**
   **dass** ausdrücklich Feldverstärkung betrieben wird, insbesondere bei einer Permanentmagnet-Synchronmaschine ein positiver feldbildender Strom eingeprägt oder eine Induktionsmaschine oberhalb des Nennflusses betrieben wird.

5. Verfahren nach einem der vorhergehenden Ansprüche,
   **dadurch gekennzeichnet,**
   **dass** zum Modulationsverfahren der Ein-Phasen-Taktung bei einer geforderten theoretischen Einschaltzeit eines Umrichterschaltelements oberhalb eines oberen Schwellwertes dessen Einschaltzeit auf 100% angehoben und/oder bei einer geforderten theoretischen Einschaltzeit eines Umrichterschaltelements unterhalb eines unteren Schwellwertes dessen Einschaltzeit auf 0% abgesenkt wird.

6. Verfahren nach Anspruch 5,
   **dadurch gekennzeichnet,**

**dass** der obere Schwellwert der Einschaltzeit zwischen 93% und 97% und der untere Schwellwert der Einschaltzeit zwischen 2% und 6% gewählt sind.

7. Verfahren nach Anspruch 5 oder 6,
   **dadurch gekennzeichnet,**
   **dass** die Auf- und/oder Abrundung der geforderten Einschaltzeiten der Umrichterschaltelemente mittels einer nichtlinearen Fangfunktion vorgenommen wird.

8. Verfahren nach einem der vorhergehenden Ansprüche,
   **dadurch gekennzeichnet,**
   **dass** das Modulationsverfahren der Ein-Phasen-Taktung als ein Modulationsverfahren einer 120°-Zwei-Phasen-Taktung mit Übermodulation gegeben ist.

9. Umrichter enthaltend drei Halbbrücken mit jeweils zwei in Serie geschalteten Schaltelementen sowie einen Pulsweitenmodulator, der zur Ansteuerung nach einem Verfahren gemäß einem der vorhergehenden Ansprüche ausgebildet ist.

## Claims

1. Method for controlling a three-phase converter with a voltage intermediate circuit by means of pulse-width modulation for supplying a polyphase system, in particular a three-phase machine, wherein the converter is operated with at least two different modulation methods, between which changeovers are made depending on the operating state of the polyphase system, **characterized** **in that** the converter is operated with the modulation method of three-phase clocking during starting and/or at low rotating-field frequencies of the polyphase system, in that the converter is operated with the modulation method of two-phase clocking above a minimum rotating-field frequency of the polyphase system, and in that the converter is operated with the modulation method of single-phase clocking when the polyphase system is operated with output voltages above a minimum voltage value, which minimum voltage value is selected to be between 60% and 70% of the possible voltage adjustment range, wherein, for the modulation method of single-phase clocking, in the event of field control, a field-forming current is set, so that overmodulation occurs in respect of the output voltages.

2. Method according to Claim 1,
   **characterized**
   **in that** the minimum rotating-field frequency is selected to be between 8 Hz and 12 Hz.

**3.** Method according to Claim 1 or 2, **characterized in that**, for the modulation method of single-phase clocking, in the event of control by means of space-vector modulation, the output voltage is adjusted to the hexagonal limit in sectors.

**4.** Method according to one of the preceding claims, **characterized in that** field amplification is expressly operated, a positive field-forming current being applied or an induction machine being operated above the nominal flux, in particular in a permanent-magnet synchronous machine.

**5.** Method according to one of the preceding claims, **characterized in that**, for the modulation method of single-phase clocking, the switch-on time of a converter switching element is raised to 100% given a required theoretical switch-on time of the said converter switching element above an upper threshold value and/or the switch-on time of a converter switching element is lowered to 0% given a required theoretical switch-on time of the said converter switching element below a lower threshold value.

**6.** Method according to Claim 5, **characterized in that** the upper threshold value of the switch-on time is selected to be between 93% and 97% and the lower threshold value of the switch-on time is selected to be between 2% and 6%.

**7.** Method according to Claim 5 or 6, **characterized in that** the required switch-on times of the converter switching elements are rounded up and/or rounded down by means of a non-linear snap function.

**8.** Method according to one of the preceding claims, **characterized in that** the modulation method of single-phase clocking is given as a modulation method of 120° two-phase clocking with overmodulation.

**9.** Converter comprising three half-bridges with in each case two switching elements which are connected in series, and also a pulse-width modulator which is designed for driving purposes in accordance with a method according to one of the preceding claims.

**Revendications**

**1.** Procédé pour commander un convertisseur triphasé comportant un circuit de tension intermédiaire par modulation d'impulsion en largeur pour alimenter un système à courant triphasé, notamment une machine à champ tournant, dans lequel le convertisseur est mis en fonctionnement selon au moins deux procédés de modulation différents, entre lesquels un basculement est effectué en fonction de l'état de fonctionnement du système à courant triphasé, **caractérisé en ce que** le convertisseur est mis en fonctionnement conformément au procédé de modulation à cadencement triphasé pendant le démarrage et/ou pour les plus faibles fréquences de champ tournant du système à courant triphasé, **en ce que**, au-dessus d'une fréquence de champ tournant minimale du système à courant triphasé le convertisseur est mis en fonctionnement conformément au procédé de modulation à cadencement biphasé, et **en ce que**, lors d'un fonctionnement du système à courant triphasé avec des tensions de sortie supérieures à une valeur de tension minimale qui est sélectionnée entre 60% et 70% de la plage de réglages de tension possible du convertisseur, le convertisseur est mis en fonctionnement conformément au procédé de modulation à cadencement monophasé, dans lequel, pour le procédé de modulation, le cadencement monophasé est réglé lors d'une commande de champ d'un courant générateur de champ, de manière à ce qu'il se produise une surmodulation en ce qui concerne les tensions de sortie.

**2.** Procédé selon la revendication 1, **caractérisé en ce que** la fréquence de champ tournant minimale est sélectionnée entre 8 Hz et 12 Hz.

**3.** Procédé selon la revendication 1 ou 2, **caractérisé en ce que**, pour le procédé de modulation, le cadencement monophasé, lors d'une commande effectuée au moyen d'une modulation du vecteur spatial, la tension délivrée est commandée secteur par secteur de manière à ce qu'elle se situe sur la limite hexagonale.

**4.** Procédé selon l'une quelconque des revendications précédentes, **caractérisé en ce qu'**une amplification de champ est mise en oeuvre de manière explicite, notamment pour une machine synchrone à aimant permanent, un courant générateur de champ positif est appliqué ou une machine à induction est mise en fonctionnement au-dessus du flux nominal.

**5.** Procédé selon l'une quelconque des revendications précédentes, **caractérisé en ce que**, pour le procédé de modulation à cadencement monophasé, pour un temps d'activation théorique exigé d'un élément de commutation de convertisseur supérieur à une valeur de seuil supérieure, son temps d'activation est augmenté à 100% et/ou pour un temps d'activation théorique exigé d'un élément de commutation de convertisseur inférieur à une valeur de seuil inférieure, son temps d'activation est réduit à 0%.

6. Procédé selon la revendication 5, **caractérisé en ce que** la valeur de seuil supérieure du temps d'activation est sélectionnée entre 93% et 97% et **en ce que** la valeur de seuil inférieure du temps d'activation est sélectionnée entre 2% et 6%.

7. Procédé selon la revendication 5 ou 6, **caractérisé en ce que** les opérations d'arrondi supérieur et/ou inférieur des temps d'activation exigés des éléments de commutation de convertisseur sont effectuées au moyen d'une fonction d'alignement non linéaire.

8. Procédé selon l'une quelconque des revendications précédentes, **caractérisé en ce que** le procédé de modulation à cadencement monophasé est utilisé en tant que procédé de modulation à cadencement biphasé à phase de 120° avec surmodulation.

9. Convertisseur contenant trois demi-ponts comportant respectivement deux éléments de commutation connectés en série ainsi qu'un modulateur d'impulsion en largeur conçu par effectuer une commande conformément à un procédé selon l'une quelconque des revendications précédentes.

Fig. 1

Fig. 2

Fig. 3

Fig. 4

Fig. 5

Fig. 6

Fig. 7

electrical angle θ [rad]

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 036514 A1
- US 2009179608 A
- US 6819078 B2
- EP 0840441 B1
- EP 2192682 A1

**In der Beschreibung aufgeführte Nicht-Patentliteratur**

- **HANDLEY, P.G. ; BOYS, J.T.** Practical real-time PWM modulators: an assessment. *IEE Proceedings B, Electric Power Applications,* Marz 1992, vol. 139 (2), 96 ff